# EUROPEAN PATENT SPECIFICATION

(11) **EP 1 260 036 B1**
(45) Date of publication and mention of the grant of the patent: **27.09.2006**
(21) Application number: 01927709.4
(22) Date of filing: 26.02.2001
(51) Int. Cl.: H04B 7/08, H04L 27/26, H04L 1/06

(54) **CIRCUIT ARRANGEMENT FOR CARRYING OUT SPATIAL DIVERSITY OPERATIONS WITH A DIGITAL SIGNAL RECEIVER**
SCHALTUNGSANORDNUNG ZUR DURCHFÜHRUNG DER RÄUMLICHEN DIVERSITÄT-OPERATIONEN MIT EINEM EMPFÄNGER FÜR DIGITALE SIGNALE
CIRCUIT PERMETTANT DE METTRE EN OEUVRE DES OPERATIONS DE DIVERSITE SPATIALE AVEC UN RECEPTEUR DE SIGNAUX NUMERIQUES

(30) Priority: 28.02.2000 DE 10009284
(43) Date of publication of application: 27.11.2002
(60) Divisional application: 06117925.5
(73) Proprietor: Nokia Corporation, 02150 Espoo (FI)
(72) Inventor: SCHWOERER, Ludwig, 45525 Hattingen (DE)
(74) Representative: Kupiainen, Juhani Kalervo
(86) International application number: PCT/EP2001/002183
(87) International publication number: WO 2001/063789

(56) References cited:
- EP-A- 0 975 101
- US-A- 5 528 581
- RINNE J: "Some Elementary Suboptimal Diversity Reception Schemes for DVB-T in Mobile Conditions" IEEE TRANSACTIONS ON CONSUMER ELECTRONICS, IEEE INC. NEW YORK, US, vol. 46, no. 3, August 2000 (2000-08), pages 847-850, XP002163931 ISSN: 0098-3063

## Description

The invention relates to a circuit arrangement for carrying out spatial diversity operations with a digital signal receiver, in particular a mobile DVB receiver, for receiving terrestrially and digitally transmitted television transmissions while the receiver is moving. Such receivers are designed to receive signals to the DVB-T Standard (Digital Video Broadcasting - Terrestrial).
Furthermore, the invention can also be used for other digital signal receivers which receive terrestrially transmitted signals and in which changing influences from multipath reception and interference are intended to be suppressed.

Terrestrial radio transmissions such as television transmissions are subject to various interference influences. These are, in particular, multipath reception of transmitted waves resulting from echoes from the vicinity of the receiving antenna or from RF interference sources in the transmitted frequency band. In this case, delay times of different duration in different transmission paths on which the transmitted waves reach a receiving antenna a number of ways depending on the site conditions, cause errors in the received signal.
With the analogue transmission method used in the past, residual sideband AM, multipath reception and interference influence the picture quality especially in the form of shadowing of the visible contours and picture noise. Nevertheless, the original picture can still be identified even if the signal-to-noise ratio in the television picture is relatively poor.

In contrast to this, with a digital modulation method for broadcast television with terrestrial transmission, such as DVB-T, the susceptibility to interference is particularly high owing to the data density used in the physical transmission channel. The said interference increases the bit error rate during transmission. Errors up to a certain gross bit error rate can be corrected completely by using known error correction devices FEC, and these allow the picture to be reproduced virtually without any interference. However, if the bit error rate exceeds a threshold value, it is no longer possible to reproduce the transmitted picture at all.

In order to allow picture reproduction without interference to a very large extent for digital terrestrial television transmission despite the expectation of reception echoes and despite the high data rate of up to about 30 Mbit/s to be transmitted, the OFDM method (Orthogonal Frequency Division Multiplex) was defined as the transmission standard for DVB-T. This is a multicarrier method, in which the entire available bandwidth is split into a large number of mutually independent, that is to say parallel, subcarriers. The transmission then takes place at a considerably lower data rate in each subband.
In principle, the OFDM method corresponds to a large number of parallel narrowband modulators in the transmitter, and corresponding demodulators in the receiver. In practice, the parallel channels in the transmitter are obtained by means of a cost-effective and powerful computation process, inverse Fourier transformation (IFFT). The transmitted signal is produced by adding the subcarriers and subsequently converting them to the RF band. According to the DVB-T Standard, the transmitted signal is quadrature amplitude modulated (QAM). Both 4-QAM or 16-QAM as well as 64-QAM can be used in this case. This means that the digital multiplexed signal OFDM, which carries a transport stream with media data, contains as the smallest unit digital modulation symbols which [lacuna] by means of a number (which is governed by the type of modulation) of values for the amplitude which [lacuna] in a location

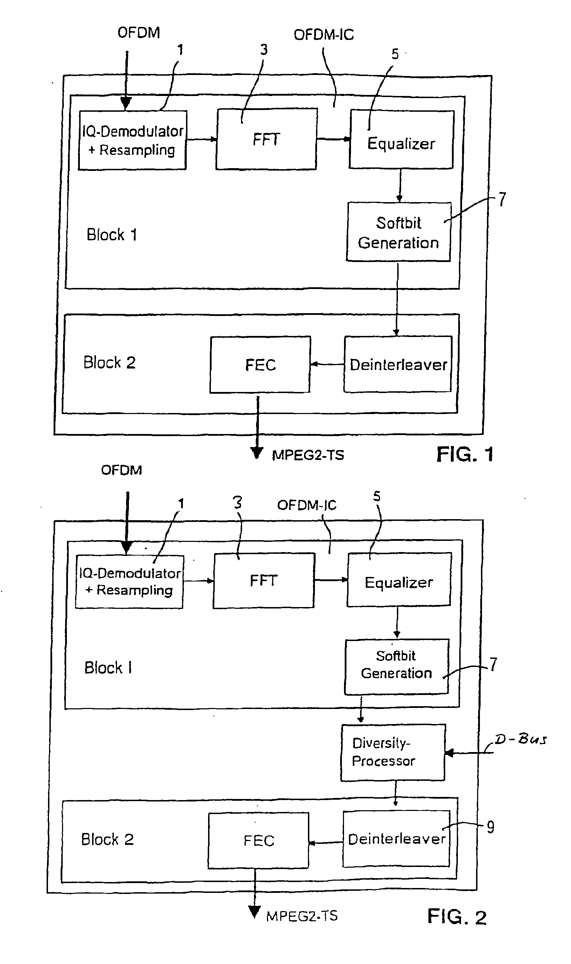

In a DVB receiver, the reception and selection of the television signal as well as the reverse conversion of the filtered digital signal are carried out first of all, using an analogue/digital converter in an analogue tuner.
The further signal processing is generally carried out in a complex integrated circuit OFDM-IC, which is known and is shown in Figure 1. This converts the digital multiplexed signal OFDM into an error-corrected MPEG-2 transport stream MPEG2-TS. The major known process steps for this are as follows:

The suppressed carrier signal is recovered in a quadrature amplitude modulator 1, a so-called IQ demodulator. This uses a resampling process to correct frequency errors and jitter.

A fast Fourier transformation (FFT), box 3, splits the received signal into its subbands.

Synchronization information in the form of pilot signals is transmitted via some of the available subcarriers. An equalizer 5 uses the pilot signals for amplitude and phase angle correction of the subcarrier signals with respect to one another. The information in the parallel subbands is provided as a serial digital transport stream at the output of the equalizer.

In the following stage 7, the received modulation symbols are identified, in accordance with the type of modulation used, in their position in the locus diagram. Corresponding association with the closest symbol is carried out irrespective of whether the symbol is actually located at a nominal position in the locus diagram. A decision in the form of a so-called hard decision is in this case made in the integrated circuit. If, for example, 64-QAM has been used for modulation, then the specific position of each modulation symbol in the locus diagram then defines its importance by means of a six-bit long data word. In order to identify the magnitude of any possible error in this decision, three further bits are generated at this point in parallel to each of the six bits of the hard decision, and identify the error between the nominal position of the modulation symbol and the actual position. A subsequent so-called softbit process is thus used to produce information which indicates the probability with which it has been possible to identify the received modulation symbol correctly.

In the interests of clear illustration, the circuit stages 1 to 7 have been combined to form a circuit block, Block 1.

After identification and the decision process for the received modulation symbols, error correction, which is known per se, is carried out in Block 2 in the integrated circuit. Since each subband represents a specific narrowband transmission channel and the subcarriers are located close to one another in the frequency band, adjacent subbands are also influenced to a similar extent by interference. This means that, in the case of cohesive data which are transmitted on closely adjacent carriers, the unavoidable interference on the transmission channel leads to relatively large areas subject to interference in the received data. However, errors which follow one another closely lead to the error correction system being overloaded considerably more quickly than a uniform, random distribution. Databits which are adjacent in time are distributed between the data carriers in accordance with a pseudo-random pattern by interleaving at the transmitter end. On reception, the interleaving is reversed in a deinterleaver 9, which makes optimum use of the performance of the error correction in the integrated circuit OFDM-IC.

The subsequent error correction system FEC links an external Reed-Solomon code with an internal convolution code. In this case, the bit errors which have occurred during transmission can be corrected even if the channel conditions are poor.

Thus, by selecting a suitable antenna location, the reception and reproduction of television pictures using a fixed-position receiver present no problems. Errors can often be at least reduced by slightly changing the position of the receiving antennas. However, the reception of echo waves creates a problem for a mobile DVB-T receiver, whose reception location changes continuously, for example during reception in a vehicle. In this case, the poor environmental structure can lead to a reception which is locally subject to interference, so that the bit error rate of the received signal exceeds the threshold value and reproduction of the transmitted picture is no longer possible in certain vehicle positions.

In this case, so-called spatial diversity operation for reception, using different physically distributed receiving antennas, provides a remedy. In this case, as is known, a comparison device in the mobile digital television receiver selects the best received signal from at least two different receiving antennas.

However, a, problem that occurs in this case is to find a suitable signal point for assessing the quality of the various received signals. For this purpose, conventional analogue receivers normally have a separate tuner for each antenna, which at least amplifies and selects the signals received by the antennas, so that at least the amplitudes of the received signals on their carriers can be compared with one another.

Only inadequate information relating to the quality of the input signals of the various antennas can be found at the input of the integrated circuit OFDM-IC of a digital signal receiver to which the multiplexed signal OFDM which is selected and digitized by the tuners is applied.

Since the errors are corrected in the MPEG-2 transport stream MPEG2-TS at the output of the integrated circuit OFDM-IC and deinterleaving has been carried out, this signal point is also not very suitable for signal comparison. This gives a result only if the bit error rate has already exceeded the said critical threshold value and the reception channel selected in the diversity mode no longer allows any reproduction of the transmitted picture at all.

A patent application EP-A-0975101 discloses a known digital receiver for antenna diversity comprising a diversity processing unit, which has, based on an estimation of a propagation path characteristic, the propagation path for each subcarrier and selects the path exhibiting a high amplitude. The serial transport stream is established at the output of the demodulator.

Thus, for successful diversity operation, it is desirable to compare the quality of the various received signals at a point which is in the area of the described integrated circuit OFDM-IC. This means that a special circuit would be necessary which, up to a certain signal point, contains a number of identical signal input parts, and a selection device would be required to supply the best received signal to the circuit part which is responsible for final preprocessing of the transport stream MPEG2-TS. This would result in the development of a special integrated circuit, developed only for diversity operation, in which the first circuit stages in the signal flow would be duplicated. Owing to the small quantities to be expected, the development and production of such an integrated circuit is very costly.

The object of the invention is therefore to provide a solution which is better in terms of the outlay for costs and material.

According to the invention, the object is achieved in that an integrated circuit for an OFDM receiver is modified such that this circuit can be used as an individual item in conventional stationary DVB receivers, and can be used as a number of items in mobile DVB receivers with spatial diversity operation.

The invention is based on a circuit arrangement which has a number of reception paths, with receiving antennas which are physically, separated from one another. An RF input circuit and a complex integrated circuit (OFDM-IC) for preprocessing a selected and digitized multiplexed signal (OFDM) to form an MPEG-2 transport stream (MPEG-2-TS) are provided for each receiving antenna.

In a known manner, the complex integrated circuits (OFDM-IC) contain:
a quadrature amplitude modulator (1) for recovering the suppressed carrier signal and for correcting frequency errors and jitter by resampling,
a device (3) for fast Fourier transformation (FFT) for splitting the received signal (OFDM) into its subbands,
an equalizer (5) for amplitude and phase angle correction of the subbands in order to convert the information in the parallel subbands into a serial digital transport stream,
a decision-making apparatus (7) for identifying and for decision-making with regard to the physical position of the received modulation symbols in a locus diagram and for generating softbits which identify the error between the nominal position and the actual position,
a deinterleaver (9) for deinterleaving subbands which are interleaved for transmission,
an error correction system FEC for error correction in a transmitted transport stream with digital media data.

The invention will be explained in the following text with reference to an exemplary embodiment.

In the corresponding figures:
- Figure 1: shows an embodiment of a known complex integrated circuit for connection to the outputs of an RF input circuit and for preprocessing an MPEG-2 transport stream,
- Figure 2: shows an embodiment of the complex integrated circuit according to the invention with a diversity processor in the signal path,
- Figure 3: shows an embodiment of the circuit arrangement according to the invention for diversity operation of a DVB receiver with two reception paths and two identical complex integrated circuits according to the invention.

Figure 2 shows a practical embodiment of a complex integrated circuit OFDM-IC according to the invention. In addition to the known circuit stages 1-9 described above and the error correction system FEC a diversity processor 11 is, according to the invention, located in the signal path between an equalizer 5 and the deinterleaver 9, and has a databus D-bus with external connections for the integrated circuit OFDM-IC. The diversity processor 11 is thus located at a point at which the information in the parallel subbands has already been converted into the originally serial digital transport stream.

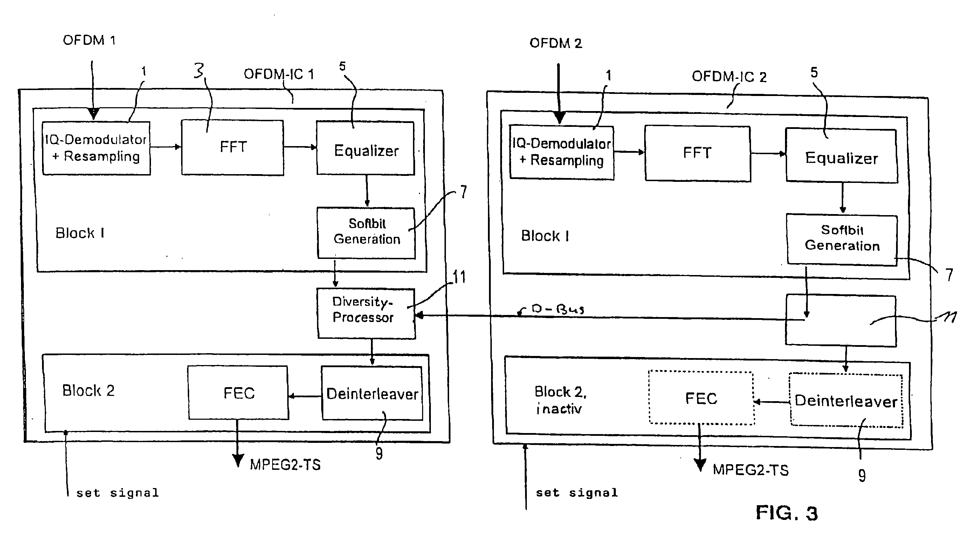

According to the invention, as shown in Figure 3, each RF input circuit is connected to a complex integrated circuit OFDM-IC as shown in Figure 2.

The diversity processors contain a comparison unit for comparing quality criteria, by means of which the reception quality of its own transport stream can be compared with the reception quality of the transport stream from another reception path, in order to switch between the serial digital transport streams of different reception paths.

According to one particularly advantageous embodiment of the invention, the diversity processor 11 in the complex integrated circuit OFDM-IC is located between the decision-making apparatus 7 for identifying and for decision-making with regard to the physical position of the received modulation symbols in the locus diagram and the deinterleaver 9. The softbits can in consequence be used advantageously as a quality criterion for the reception quality of the preprocessed transport streams.

According to a further advantageous embodiment, the complex integrated circuit OFDM-IC has a set input which, firstly, uses a specific set signal to switch the circuit to a master mode, in which the diversity processor 11 is activated for receiving the transport stream from another complex integrated circuit OFDM-IC 2 in order to compare the quality of the preprocessed transport streams. On the other hand, the complex integrated circuit (OFDM-IC) for the other reception paths can be switched to the slave mode by means of another set signal.

With little additional circuit complexity, the circuit according to the invention allows an integrated circuit for the OFDM-IC to be produced cost-effectively in large quantities, which circuit can not only be used in every reception path in a mobile DVB receiver, but can also be configured to the master or slave mode by means of external set signals.
Furthermore, when used in a mobile DVB receiver, one reception path can be configured for a picture-in-picture application for non-diversity operation.

## Claims

1. Circuit arrangement for diversity operation of a digital signal receiver with reception paths which have receiving antennas which are physically separated from one another, an RF input circuit for each receiving antenna, and a complex Integrated circuit (OFDM-IC) arranged to preprocess a selected and digitized multiplexed signal (OFDM) in a transport stream (MPEG-2-TS), with the complex integrated circuits (OFDM-IC) comprising:
a quadrature amplitude modulator (1) arranged to recover the suppressed carrier signal (OFDM),
a device (3) for fast Fourier transformation (FFT) arranged to split the received signal (OFDM) into its parallel subbands,
an equalizer (5) for amplitude and phase angle correction of the parallel subbands in order to provide the information in the parallel subbands into a serial digital transport stream,
a decision-making apparatus (7) arranged to identify and to decision-make with regard to the physical position of the received modulation symbols in a locus diagram and to generate softbits which identify the error between the nominal position and the actual position,
a deinterleaver (9) arranged to deinterleave subbands which are interleaved for transmission,
an error correction system (FEC) for error correction in the transmitted transport stream with digital media data, **characterized in that**
each RF input circuit is connected to the complex integrated circuit (OFDM-IC) which has a diversity processor (11) in the signal path between a point, at which the information in the parallel subbands is converted into the serial digital transport stream, and the deinterleaver (9), wherein the diversity processor (11) contains a databus (D-bus) for the external connections of the integrated circuit (OFDM-IC), and **in that**
the diversity processor has a comparison unit arranged to compare quality criteria, by means of which the reception quality of the transport stream preprocessed in its own reception path can be compared with the reception quality of a transport stream preprocessed in another reception path, in order to switch between the serial digital transport streams of different reception paths.

2. Circuit arrangement according to Claim 1, **characterized in that** the point at which the information in the parallel subbands is converted into a serial digital transport stream is located downstream of the equalizer (5).

3. Circuit arrangement according to Claim 1, **characterized in that** the diversity processor (11) in the complex integrated circuit (OFDM-IC) is located between the decision-making apparatus (7) arranged to identify and to decision-make with regard to the physical position of the received modulation symbols in the locus diagram and the deinterleaver (9), and **in that** the softbits are used as a quality criterion for the reception quality of the preprocessed transport streams.

4. Circuit arrangement according to Claim 1, **characterized in that** the complex integrated circuit (OFDM-IC) has a set input which, firstly, uses a specific set signal to switch the circuit to a master mode, in which the diversity processor (11) is activated for receiving the transport stream from another complex integrated circuit (OFDM-IC 2) in order to compare the quality of the transport streams and, secondly, switches the integrated circuit (OFDM-IC) to the slave mode by means of another set signal.

5. Circuit arrangement according to Claim 1, **characterized in that**, on switching to the slave mode, the set signal inhibits the operating current consumption of the deinterleaver (9) and of the error correction system FEC.

6. Circuit arrangement according to Claim 1, **characterized by** a further set input, which uses a specific set signal to bridge the signal path of the diversity processor and/or deactivates the comparison unit so that the complex integrated circuit (OFDM-IC) operates conventionally without comparing the preprocessed transport streams.

## Patentansprüche

1. Schaltungsanordnung für einen Diversity-Betrieb eines digitalen Signalempfängers, mit Empfangspfaden, die Empfangsantennen aufweisen, die physikalisch voneinander getrennt sind, einer RF-Eingangsschaltung für jede Empfangsantenne und einer komplexen integrierten Schaltung (OFDM-IC), die eingerichtet ist zum Vorverarbeiten eines ausgewählten und digitalisierten Multiplexsignals (OFDM) in einem Transportstrom (MPEG-2-TS), wobei die komplexe integrierte Schaltung (OFDM-IC) aufweisen:
einen Quadraturamplitudenmodulator (1), der eingerichtet ist zum Wiederherstellen des unterdrückten Trägersignals (OFDM),
eine Einrichtung (3) für eine schnelle FourierTransformation (FFT), die eingerichtet ist zum Aufteilen des empfangenen Signals (OFDM) in seine parallelen Teilbänder,
einen Verzerrer (5) für eine Amplituden- und Phasenwinkelkorrektur der parallelen Teilbänder, um die Informationen in den parallelen Teilbändern in einen seriellen digitalen Transportstrom bereitzustellen,
eine Entscheidungsvorrichtung (7), die eingerichtet ist zum Ermitteln und Entscheiden mit Bezug auf die physikalische Position der empfangenen Modulationssymbole in einem Ortsliniendiagramm und zum Erzeugen von Softbits, die den Fehler zwischen der nominellen Position und der tatsächlichen Position identifizieren,
einen Entschachtler (9), der eingerichtet ist zum Entschachteln von Teilbändern, die zur Übertragung verschachtelt sind,
ein Fehlerkorrektursystem (FEC) für eine Fehlerkorrektur in dem übertragenen Transportstrom mit digitalen Mediendaten, **dadurch gekennzeichnet, dass**
jede RF-Eingangsschaltung mit der komplexen integrierten Schaltung (OFDM-IC) verbunden ist, die einen Diversity-Prozessor (11) in dem Signalpfad zwischen einem Punkt, an dem die Informationen in den parallelen Teilbändern in den seriellen digitalen Transportstrom konvertiert werden, und dem Entschachtler (9) aufweist, wobei der Diversity-Prozessor (11) einen Datenbus (D-Bus) für die externen Verbindungen der integrierten Schaltung (OFDM-IC) enthält, und dass
der Diversity-Prozessor eine Vergleichseinheit aufweist, die eingerichtet ist zum Vergleichen von Qualitätskriterien, mit Hilfe derer die Empfangsqualität des in seinem eigenen Empfangspfad vorverarbeiteten Transportstroms mit der Empfangsqualität eines in einem anderen Empfangspfad vorverarbeiteten Transportstroms verglichen werden kann, um zwischen den seriellen digitalen Transportströmen von unterschiedlichen Empfangspfaden umzuschalten.

2. Schaltungsanordnung gemäß Anspruch 1, **dadurch gekennzeichnet, dass** der Punkt, an dem die Informationen in den parallelen Teilbändern in einen seriellen digitalen Transportstrom konvertiert werden, hinter dem Verzerrer (5) liegt.

3. Schaltungsanordnung gemäß Anspruch 1, **dadurch gekennzeichnet, dass** der Diversity-Prozessor (11) in der komplexen integrierten Schaltung (OFDM-IC) zwischen der Entscheidungsvorrichtung (7), die eingerichtet ist zum Ermitteln und Entscheiden mit Bezug auf die physikalische Position der empfangenen Modulationssymbole in dem Ortsliniendiagramm, und dem Entschachtler (9) liegt, und dass die Softbits als ein Qualitätskriterium für die Empfangsqualität der vorverarbeiteten Transportströme verwendet werden.

4. Schaltungsanordnung gemäß Anspruch 1, **dadurch gekennzeichnet, dass** die komplexe integrierte Schaltung (OFDM-IC) einen Setzeingang aufweist, der erstens ein spezielles Setzsignal verwendet, um die Schaltung in einen Master-Modus umzuschalten, in dem der Diversity-Prozessor (11) zum Empfangen des Transportstroms von einer anderen komplexen integrierten Schaltung (OFDM-IC 2) aktiviert wird, um die Qualität der Transportströme zu vergleichen, und zweitens die integrierte Schaltung (OFDM-IC) mit Hilfe eines anderen Setzsignals in den Slave-Modus umschaltet.

5. Schaltungsanordnung gemäß Anspruch 1, **dadurch gekennzeichnet, dass** bei Umschaltung in den Slave-Modus das Setzsignal die Betriebsstromaufnahme des Entschachtlers (9) und des Fehlerkorrektursystems (FEC) sperrt.

6. Schaltungsanordnung gemäß Anspruch 1, **gekennzeichnet durch** einen weiteren Setzeingang, der ein spezielles Setzsignal verwendet, um den Signalpfad des Diversity-Prozessors zu überbrücken, und/oder die Vergleichseinheit deaktiviert, so dass die komplexe integrierte Schaltung (OFDM-IC) auf herkömmliche Weise arbeitet, ohne die vorverarbeiteten Transportströme zu vergleichen.

## Revendications

1. Agencement de circuit permettant un fonctionnement de diversité d'un récepteur de signal numérique comprenant des trajets de réception qui comprennent des antennes de réception qui sont physiquement séparées les unes des autres, un circuit radiofréquentiel d'entrée pour chaque antenne de réception , et un circuit intégré complexe (OFDM-IC) prévu pour pré traiter un signal sélectionné et un signal multiplexé digitalisé (OFDM) dans un flux de transport (MPEG-2-TS), comprenant les circuits intégrés complexes (OFDM-IC) comprenant :
un modulateur d'amplitude en quadrature (1) prévu pour récupérer le signal supprimé de porteuse (OFDM),
un dispositif (3) permettant la transformation rapide de Fourier (FFT) prévu pour le fractionnement du signal reçu (OFDM) dans ses sous-bandes parallèles,
un égaliseur (5) permettant la correction d'angle d'amplitude et de phase des sous-bandes parallèles afin de fournir les informations dans les sous-bandes parallèles dans un flux de transport numérique sériel,
un dispositif de prise de décision (7) prévu pour identifier et pour réaliser une décision pour ce qui concerne la position physique des symboles reçus de modulation dans un diagramme de lieu géographique et pour produire les bits de programme qui identifient l'erreur entre la position nominale et la position actuelle,
un dispositif de désentrelacement (9) agencé pour désentrelacer des sous-bandes qui sont intercalées pour l'émission,
un système de correction d'erreurs (FEC) permettant de corriger des erreurs dans le flux émis de transport avec des données numériques de supports, **caractérisé en ce que**
chaque circuit radiofréquentiel d'entrée est relié au circuit intégré complexe (OFDM-IC) qui comprend un processeur de diversité (11) dans le trajet d'accès de signal entre un point, pour lequel les informations dans les sous-bandes parallèles sont converties en flux de transport numérique sériel, et le dispositif de désentrelacement (9), dans lequel le processeur de diversité (11) contient un bus de données (D-bus) pour les connexions externes du circuit intégré (circuit intégré complexe OFDM-IC), et **en ce que**
le processeur de diversité comprend une unité de comparaison prévue pour comparer des critères de qualité, grâce auxquels la qualité de réception du flux de transport prétraité dans son propre trajet d'accès de réception peut être comparé avec la qualité de réception d'un flux de transport prétraité dans un autre trajet d'accès de réception, afin de commuter entre les flux de transport numériques sériels de différents trajets d'accès de réception.

2. Dispositif de circuit selon la revendication 1, **caractérisé en ce que** le point auquel les informations dans les sous-bandes parallèles sont converties en flux de transport numérique sériel est situé en aval de l'égaliseur (5).

3. Dispositif de circuit selon la revendication 1, **caractérisé en ce que** le processeur de diversité (11) dans le circuit intégré complexe (OFDM-IC) est situé entre le dispositif de prise de décision (7) prévu pour identifier et pour réaliser une décision pour ce qui concerne la position physique des symboles reçus de modulation dans le diagramme de lieu géographique et le dispositif de désentrelacement (9), et **en ce que** les bits de programme sont utilisés en tant que critère de qualité pour la qualité de réception des flux prétraités de transport.

4. Dispositif de circuit selon la revendication 1, **caractérisé en ce que** le circuit intégré complexe (OFDM-IC) comprend une entrée fixée qui, premièrement, utilise un signal paramétré spécifique pour commuter le circuit suivant un mode directeur, dans lequel le processeur de diversité (11) est mis en action pour recevoir le flux de transport à partir d'un autre circuit intégré complexe (OFDM-IC 2) afin de comparer la qualité des flux et, deuxièmement, commuter le circuit intégré (OFDM-IC) selon le mode asservi grâce à un autre signal paramétré.

5. Dispositif de circuit selon la revendication 1, **caractérisé en ce que**, en commutant au mode asservi, le signal paramétré empêche la consommation de courant de fonctionnement du dispositif de désentrelacement (9) et du système de correction d'erreurs FEC.

6. Dispositif de circuit selon la revendication 1, **caractérisé en ce qu'**une autre entrée fixée, qui utilise un signal paramétré spécifique afin de ponter le trajet d'accès de signal du processeur de diversité et/ou désactiver l'unité de comparaison de telle sorte que le circuit intégré complexe (OFDM-IC) fonctionne traditionnellement sans comparer les flux prétraités de transport.
